# EUROPÄISCHE PATENTSCHRIFT

(11) **EP 1 712 807 B1**
(45) Veröffentlichungstag und Bekanntmachung des Hinweises auf die Patenterteilung: **15.08.2012**
(21) Anmeldenummer: 06004887.3
(22) Anmeldetag: 10.03.2006
(51) Int. Cl.: F16D 13/38

(54) **Drehmomentübertragungssystem**
Torque transmission system
Système de transmission de couple

(30) Priorität: 17.03.2005 DE 102005012820
(43) Veröffentlichungstag der Anmeldung: 18.10.2006
(73) Patentinhaber: ZF Friedrichshafen AG, 88046 Friedrichshafen (DE)
(72) Erfinder: Kühner, Michael, 97523 Schwanfeld (DE); Feldhaus, Reinhard, 97502 Euerbach (DE); Mensch, Waldemar, 97503 Gädheim-Ottendorf (DE); Peterseim, Michael, 97493 Bergrheinfeld (DE); Orlamünder, Andreas, 97422 Schweinfurt (DE); Kister, Igor, 97076 Würzburg (DE); Weth, Jürgen, 97464 Niederwerrn (DE); Dögel, Thomas, 97688 Bad Kissingen (DE)

(56) Entgegenhaltungen:
- EP-A- 1 174 633
- EP-A- 1 384 911
- EP-A- 1 519 074
- FR-A- 2 856 120

## Beschreibung

Die vorliegende Erfindung betrifft ein Drehmomentübertmgungssystem, Insbesondere für den Antriebsstrang eines Fahrzeugs, umfassend eine Torsionsschwingungssdämpferanordnung mit einer mit einem Antriebsorgan zu verbindenden Primärseite und einer über eine Dämpferelementenanordnung zur Drehmomentübertragung mit der Primärseite gekoppelten und bezüglich dieser um eine Drehachse drehbaren Sekundärseite, eine Kupplung mit einem mit der Sekundärseite der Torslonsschwingungssdämpferanordnung verbundenen Eingangsbereich und einem mehrere in Richtung der Drehachse aufeinander folgende Kupplungsscheiben umfassenden Ausgangsbereich. Die Kupplungsscheiben des Ausgangsbereichs Können über eine gemeinsame Nabenanordnung mit einem Abtriebsorgan verbunden sein.

Derartige Drehmomentübertragungssysteme werden zunehmend in Verbindung mit Antriebsaggregaten eingesetzt, die in der Lage sind, ein vergleichsweise hohes Drehmoment abzugeben. Durch den Einsatz mehrerer Kupplungsscheiben in der Mehrscheibenkupplung wird eine entsprechende Erhöhung der zur Drehmomentübertragung nutzbaren Relboberfläche erlangt, was die Übertragung entsprechend hoher Drehmomente gestattet. Ein Problem bei derartigen Drehmomentübertragungssystemen ist jedoch der beschränkte für diese zur Verfügung stehende Bauraum. Vor allem so genannte Front-Quer-Antriebsstränge, bei welchen die Anordnung quer zwischen den Vorderrädern eines Fahrzeugs vorzusehen Ist, weist Insofern eine Begrenzung auf, als die Spur eines Fahrzeugs nicht beliebig verändert bzw. verbreitert werden kann. Eine Begrenzung des bezogen auf die Drehachse des Gesamtsystems zur Verfügung stehenden axialen Bauraums führt im Allgemeinen aber dazu, dass auf Grund der Tatsache, dass die Torsionsschwingungssdämpferanordnung bzw. die Dämpferelementenanordnung derselben und die Kupplungsscheiben axial aufeinanderfolgen, eine Begrenzung In der Dimensionierung der im Allgemeinen als Schraubendruckfedern ausgeführten Dämpferelemente der Dämpferelementenanordnung und demenstprechend auch eine Begrenzung des Schwingungsdämpfungsvermögens vorhanden sind.

Aus dem Stand der Technik ist die DE 10 2004 027 799 A1 bekannt, bei der eine Drehmomentübertragungseinheit offenbart wird, die ein als Tilger ausgebildetes Schwungrad aufweist, welches im geöffneten Zustand der Reibungskupplung aus zwei voneinander unabhängig gelagerten Schwungmassen besteht. Beim Schließen der Reibungskupplung erfährt die axialelastische Aufhängung des Widerlagers eine Verlagerung zum Klemmen der frei gelagerten Schwungmasse mit einer kuppelbaren Verbindung mit der Kupplungsscheibe. Diese Ausführung ist axial groß bauend und weist im eingerückten Zustand eine sehr begrenzte Torsionsschwingungsdämpfungsfähigkeit auf.

Weiterhin sind aus der EP 1 519 074 A2 und der EP 1 174 633 A2 Doppelkupplungsanordnungen bekannt, bei denen die einzelnen Kupplungspakete radial zueinander gestaffelt jeweils durchgängig identische Reibscheiben in einem Kupplungspaket aufweisen. Hier ist durch die Ausgestaltung als nasse Reibungskupplung ein sehr hoher Fertigungsaufwand gegeben, welcher ebenfalls eine große axiale Breite aufweist.

Aus der EP 1 384 911 A2 ist eine Drehmomentübertragungseinrichtung bekannt, bei der axial folgend auf einen Torsionsschwingungsdämpfer zwei aufeinander folgend angeordnete Reibungskupplungen einer Doppelkupplung offenbart sind.

Diese Bauart weist ebenfalls einen hohen Bauraumbedarf in Axialrichtung auf.

Es ist daher die Aufgabe der vorliegenden Erfindung, ein Drehmomentübertragungssystem, Insbesondere für den Antriebsstrang eines Fahrzeugs, vorzusehen, bei welchem bei begrenzt erforderlichem Bauraum ein besseres Schwingungsentkopplungsverhalten erzielt werden kann.

Erfindungsgemäß wird diese Aufgabe gelöst durch ein Drehmomentübertragungssystem, gemäß den Merkmalen des Anspruchs 1.

Die vorllegende Erfindung sieht also eine Staffelung der radialen Außenabmessung der Kupplungsscheiben vor, wobei insbesondere diejenige Kupplungsscheibe, die der Torsionsschwingungssdämpferanordnung und somit auch der Dämpferelementenanordnung am nächsten liegt, kleiner dimensioniert ist. Dies hat zur Folge, dass radial außerhalb dieser Kupplungsscheibe Bauraum frei wird, der für Bereiche der Torslonsschwingungsdämpferanordnung genutzt werden kann. Die Folge davon ist, dass der für die Diampferelementenenordnung verfügbare Bauraum ohne wesentliche oder überhauptvorhandene Bauraumzunahme der Gesamtanordnung vergrößert werden kann. Mehr Volumen für die Dämpferelementenanordnung hat jedoch zur Folge, dass größere bzw. auch stärker dimensionerte Dämpferelemente eingesetztwerden können, was insbesondere auch unter Berücksichtigung der zunehmenden zu übertragenden Motormomente zu einem besseren Schwingungsentkopplungsverhalten beiträgt.

Beispielsweise kann vorgesehen sein, dass die Dämpferelementenanordnung der Torslonsschwingungssdämpferanordnung In einem Bereich radial außerhalb der ersten Kupplungsscheibe angeordnet ist. Diese radiale Staffelung der Dämpferelementenanordnung einerseits und der ersten Kupplungsscheibe andererseits führt zu einer sehr effizienten Bauraumausnutzung, bedeutet aber nicht notwendigerweise, dass diese beiden Systembereiche sich auch axial überlappen müssen. Wenn jedoch vorgesehen ist, dass wenigstens ein Teil der ersten Kupplungsscheibe oder/und eine dieser zugeordnete Reibfläche des Eingangsbereichs der Kupplung in einem von der Dämpferelementenanordnung umgebenden Volumenbereich angeordnet ist, dann wird nicht nur durch radiale Staffelung, sondern auch durch axialen Überlapp die Kompaktheit eines Gesamtsystems weiter verbessert.

Um gleichwohl ungewünschte Limitierungen in der Drehmomentübertragungskapazität vermeiden zu können, wird vorgeschlagen, dass die zweite Kupplungsscheibe und die Dämpferelementenanordnung sich radial überlappen.

Wenn vorgesehen ist, dass die erste Kupplungsscheibe und die zweite Kupplungsscheibe Im Bereich ihrer Reibbeläge im Wesentlichen die gleiche axiale Dicke aufweisen, ist dafür gesorgt, dass im Bereich der beiden bzw. aller Kupplungsscheiben das gleiche Belagverschleißvolumen bereitgehalten wird. Das Verschleißverhalten der beiden bzw. aller Kupplungsscheiben kann dadurch einander angeglichen werden, dass die erste Kupplungsscheibe und die zweite Kupplungsscheibe im Bereich ihrer Reibbeläge im Wesentlichen gleiche Reiboberflächen bereitstellen.

Der erfindungsgemäße Aufbau kommt besonders bel einer Mehrschelbenkupplung zu tragen, also einem Aufbau, bei dem die Kupplungsscheiben des Ausgangsbereichs über eine gemeinsame Nabenanordnung mit einem Abtriebsorgan zu verbinden sind.

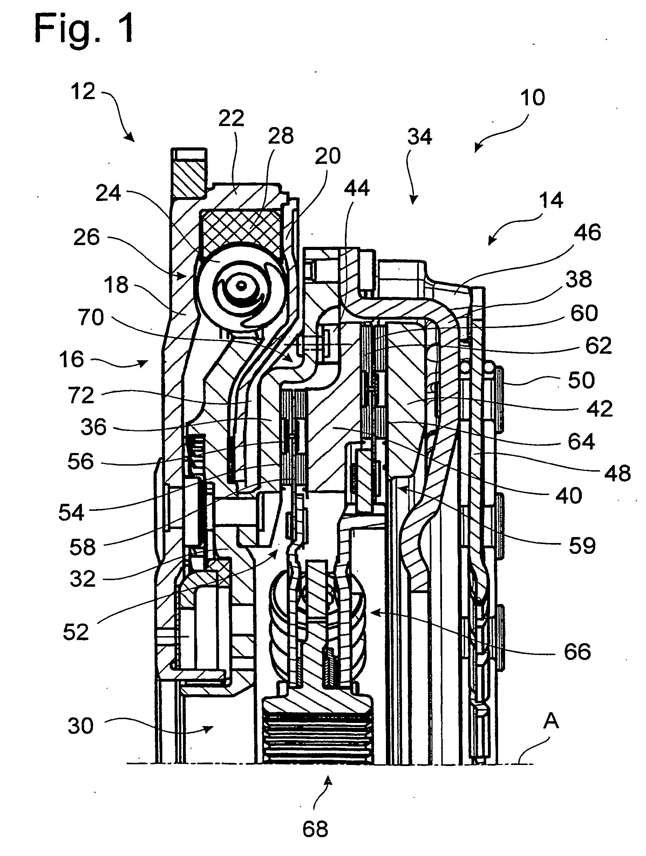

Die vorliegende Erfindung wird nachfolgend mit Bezug auf die beiliegende Figur detailliert beschrieben, welche eine Teil-Längsschnittansicht eines erfindungsgefäßen Drehmomentübertragungssystems zeigt.

Das in der Figur dargestellte Drehmomentübertragungssystem 10 umfasst als die wesentlichen Systembereiche eine Torsionsschwingungsdämpferanordn ung 12 sowie eine Zweischeibenkupplung 14. Die Torsionsschwingungssdämpferanordnung 12 ist mit einer Primärseite 16 zur Verbindung mit einem Antriebsorgan, also beispielsweise einer Antriebswelle einer Brennkraftmaschine ausgebildet. Diese Primärseite 16 wiederum umfasst zwei Deckscheibenelemente 18, 20, wobei das motorseitig zu positionierende Deckscheibenelement 18 radial außen einen axialen Bereich 22 aufweist, mit welchem das Deckschelbenelement 20 fest verbunden Ist. In diesem radial außen an der Primärseite 16 vorgesehenen Volumenbereich liegen die Dämpferelemente 24 einer Dämpterelementenanordnung 26. Diese Dämpferelemente 24, die beispielsweise nach außen hin und an jeweiligen Abstützbereichen über gleitfähige Abstützelemente 28 abgestützt sind, liegen in Umfangsrichtung aufeinanderfolgend bzw. auch ineinander geschachtelt undbilden in ihrer Gesamtheit eine näherungsweise ringartige Struktur um eine Drehachse A.

Eine Sekundärseite 30 der Torsionsschwingungssdämpferanordnung 12 umfasst im Wesentlichen ein Zentralscheibenelement 32, das zwischen die beiden Deckscheibenelemente 18, 20 eingreift und radial außen in Drehmomentübertragungswechselwirkung mit den Dämpferelementen 24 der Dämpferelementenanordnung 26 steht. Die Primärseite 16 und die Sekundärseite 30 sind über Axiallageranordnungen und Radiallageranordnungen bezüglich einander abgestützt. Ferner können an einer dieser Baugruppe Planetenräder getragen sein, die bei Relativdrehung von Primärseite 16 und Sekundärseite 30 in Drehung versetzt werden und somit weiter zur Abfuhr von Schwingungsenergie beltragen. Der radial äußere und von den Deckscheibenelementen 18, 20 und dem Bereich 22 umschlossene Bereich, in welchem auch die Dämpferelemente 24 liegen, kann mit viskosem Medium gefüllt sein, um einerseits einen Schmiereffekt bereitzustellen, und um andererseits eine weitere Abfuhr von Schwingungsenergie zu ermöglichen.

Die Zweischeibenkupplung 14 umfasst einen Eingangsbereich 34, der mit der Sekundärseite 30 der Torsionsschwingungsdämpferanordnung 12, nämlich dem Zentralscheibenelement 32, beispielsweise durch Nietelemente, ggf. aber auch elastische Elemente, verbunden ist. Dieser Eingangsbereich 34 umfasst ein scheibenartiges Masseteil 36, über welches die Anbindung an die Sekundärseite 30 realisiert ist. Mit diesem Masseteil 36 ist radial außen ein Gehäuse 38 verbunden. In dem von dem Masseteil 36 und dem Gehäuse 38 umschlossenen Volumenbereich liegen massemäßig dem Eingangbereich 34 zugeordnet eine Zwischenscheibe 40 und eine Anpressplatte 42. Die Zwischenscheibe 40 ist grundsätzlich zur gemeinsamen Drehung mit dem Masseteil 36 bzw. dem Gehäuse 38 gekoppelt, in der dargestellten Ausgestaltungsform beispielsweise über Tangentialblattfedern 44. Auf diese Art und Weise ist gleichzeitig auch eine axiale Bewegbarkeit der Zwischenplatte 40 gewährleistet. Auch die Anpressplatte 42 ist zur gemeinsamen Drehung mit dem Masseteil 36 bzw. dem Gehäuse 38 gekoppelt, beispielsweise ebenfalls über Tangentialblattfedern, welche gleichzeitig auch eine Lüftkraft bereitstellen. In verschiedenen Umfangsbereichen ist das Gehäuse 38 nach radial außen hin und axial offen, und in diesen Bereichen liegen Beaufschlagungsabschnitte 46 der Anspressplatte 42, auf welche ein an der Außenseite des Gehäuses 38 vorgesehenes Kraftbeaufschlagungselement 48, beispielsweise in Form einer Membranfeder, einwirkt. Dieses Kraftbeaufschlagungselement 48 ist über Distanzbolzen 50 o.dgl. bezüglich des Gehäuses 38 axial abgestützt und erzeugt durch seine Vorspannkraft eine die Anpressplatte 38 in Richtung auf das Masseteil 36 zu beaufschlagende Krafteinwirkung. Es sei hier darauf hingewiesen, dass selbstverständlich an Stelle einer Membranfeder auch ein Hebelsystem eingesetzt werden kann, über welches die von einem Einrückersystem gelieferte Einrückkraft auf die Anpressplatte übertragen wird.

Zwischen der Zwischenplatte 40 und dem Masseteil 36 liegt eine erste Kupplungsscheibe 52 der Doppelkupplung 14. Diese Kupplungsscheibe 52 weist in ihrem radial äußeren Bereich Reibbeläge 54 auf, und diesen Reibbelägen 54 liegen am Masseteil 36 einerseits und der Zwischenplatte 48 andererseits Reibflächen 56 bzw. 58 gegenüber.

Zwischen der Zwischenplatte 40 und der Anpressplatte 42 liegt eine zweite Kupplungsscheibe 59. Auch diese weist in ihrem radial äußeren Bereich Reibbeläge 60 auf, welchen an der Zwischenplatte 40 einerseits und der Anpressplatte 42 andererseits wiederum Reibflächen 62, 64 zugeordnet sind.

Erzeugt das Kraftbeaufschlagungselement 48, also beispielsweise eine Membranfeder, eine Einrückkraft, so wird die Anpressplatte 42 mit ihrer Reibfläche 64 gegen die Reibbeläge 60 der zweiten Kupplungsscheibe 59 gepresst, wodurch diese Reibbeläge 60 gegen die Reibfläche 62 der Zwischenplatte 40 pressen. Die Zwischenplatte 40 überträgt diese axiale Presskraftwirkung mit ihrer Reibfläche 58 auf die Reibbeläge 54 der ersten Kupplungsscheibe 52, welche sich mit ihren Reibbelägen 54 an der Reibfläche 56 des Masseteils 36 abstützt. So wird durch die beiden Kupplungsscheiben 52 und 59 ein Reibkraftschluss zum Eingangsbereich 34 der Kupplung 14 hergestellt.

Die beiden Kupplungsscheiben 52 und 59 sind über eine gemeinsame Nabenanordnung 66, die beispielsweise ebenfalls eine Torsionsschwingungsdämpferanordnung umfassen kann, an ein Abtriebsorgan, also beispielsweise eine Getriebeeingangswelle anzukoppeln, so dass über diesen im Wesentlichen die beiden Kupplungsscheiben 52 und 59 und die Nabenanordnung 66 umfassenden Ausgangsbereich 68 der Kupplung 14 das über die Primärseite 16 der Torsionsschwingungsdämpferanordnung eingeleitete Drehmoment wieder abgegeben werden kann, wobei hier selbstverständlich Bezug genommen wird auf einen Drehmomentenfluss, wie er im Antriebszustand vorliegt.

Man erkennt in der Figur, dass die beiden Kupplungsscheiben 52 und 59 zueinander nicht baugleich sind. Die Kupplungsscheibe 52 weist eine geringere Außenabmessung auf und erstreckt sich somit nicht so weit nach radial außen, wie dies bei der zweiten Kupplungsscheibe 59 der Fall ist. Dementsprechend liegen auch die den Reibbelägen 54 der ersten Kupplungsscheibe 52 zugeordneten Rebflächen 56 und 58 des Eingangsbereichs 34 radial weiter innen, als die den Reibbelägen 60 der zweiten Kupplungsscheibe 59 zugeordneten Reibflächen 62 und 64. Man erkennt weiterhin, dass das die Anbindung zur Sekundärseite 30 der Torsinonsschwingungsdämpferanordnung 12 herstellende Masseteil 36 unmittelbar außerhalb der daran vorgesehenen Reibfläche 56 axial abgekrümmt ist und sich zunächst axial in Richtung von der Torsionsschwingungsdämpferanordnung 12 weg erstreckt. Um hier beispielsweise ausreichend Bauraum für die Tangentialblattfedern 44 zu belassen, kann die Zwischenplatte 40 eine entsprechende axiale Abbiegung bzw. Aussparung aufweisen, in welche das Masseteil 36 zumindest geringfügig eintauchen kann. Folgend auf diesen im Wesentlichen die axiale Dicke der Reibbeläge 54 der ersten Kupplungsscheibe 52 überbrückenden axialen Abschnitt des Masseteils 36 erstreckt sich dieses dann wieder näherungsweise radial nach außen, um einen Bereich bereitzustellen, in welchem die Verbindung mit dem Gehäuse 38 hergestellt ist. Somit ergibt sich an der der Torsionsschwingungsdämpferanordnung 12 zugewandten Seite der Kupplung 14 eine Aussparung 70, in welche die Torsionsschwingungsdämpferanordnung 14 eintaucht. Man erkennt, dass insbesondere das der Kupplung 14 näher liegende Deckscheibenelement 20 in diese Aussparung 70 eintaucht, ebenso wie derjenige Volumenbereich, in welchem die Dämpferelemente 24 der Dämpferelementenanordnung 26 liegen, so dass auch diese Dämpferelemente 24 teilweise in diese Aussparung 70 der Kupplung 14 eingreifen. Dies wird dadurch ermöglicht, dass die der Torsionsschwingungsdämpferanordnung 12 näher liegende erste Kupplungsscheibe 52 eine geringere Radialabmessung aufweist und sich nicht bis in denjenigen radialen Bereich hinauserstreckt, in welchem die Dämpferelemente 24 liegen. Ferner sind, um dieses Eintauchen in die Aussparung 70 zu ermöglichen, das Deckscheibenelement 20 und auch das Zentralscheibenelement 32 axial entsprechend gekrümmt. Durch diese axiale Abkrümmung des Deckscheibenelements 20 und des Zentralscheibenelements 32 wird radial innerhalb der Aussparung 70 der Kupplung 14 im Bereich der Torsionsschwingungsdämpferanordnung 12 eine komplementäre Aussparung 72 bereitgehalten, die die in der Figur erkennbare ineinander geschachtelte Positionierung gestattet.

Es wird somit eine Anordnung erhalten, bei welcher die beiden Baugruppen Torsionsschwingungsdämpferanordnung 12 einerseits und Zweischeibenkupplung 14 andererseits ineinander eingreifend und somit in axial sehr Raum sparender Anordnung bezüglich einander positioniert werden. Die Kupplung 14 liegt mit ihrer ersten Kupplungsscheibe 52 bzw. auch der dieser zugeordneten Reibfläche 56 so nahe an der Torsionsschwingungsdämpferanordnung 12, dass diese Reibfläche 56 und auch die Reibbeläge 54 teilweise von den Dämpferelementen 24 der Dämpferelementenanordnung 26 axial überlappt sind.

Um bei der in der Figur erkennbaren radialen Staffelung der Reibbeläge 54, 60 der beiden Kupplungsscheiben 52, 59 im Bereich dieser beiden Kupplungsscheiben ein gleichmäßiges Drehmomentübertragungsverhalfen und auch ein gleichmäßiges Abnutzungsverhalten zu erreichen, kann vorgesehen sein, dass beide Kupplungsscheiben im Bereich ihrer Reibbeläge 54, 60 mit der gleichen axialen Dicke und somit dem gleichen Abriebvolumen ausgestaltet sind. Ferner ist es vorteilhaft, wenn beide Kupplungsscheiben bzw. die diesen jeweils zugeordneten Reibflächen gleich dimensioniert sind, so dass auch hier näherungsweise ein gleiches Abriebverhalten und ein gleiches Drehmomentübertragungsverhalten erreicht werden kann.

Mit dieser Anordnung wird also bei sehr kompakter axialer Baugröße vergleichsweise viel Bauraum für die Dämpferelementenanordnung nutzbar. In Verbindung damit, dass dieser Bauraum vergleichsweise weit radial außen liegt, wird es möglich, ein entsprechend großes Federvolumen bereitzustellen, was einerseits hinsichtlich der übertragbaren Drehmomente vorteilhaft ist, andererseits aber auch hinsichtlich des erreichbaren Relativdrehwinkels zwischen Primärseite 16 und Sekundärseite 30 vorteilhaft ist. Da ferner das Kraftbeaufschlagungselement 48, also beispielsweise eine Membranfeder, an der Außenseite des Gehäuses 38 gehalten ist, kann dieses mit vergleichsweise großer Radialabmessung ausgebildet sein und somit mit flacher Federkennlinie und spannungsgünstig ausgelegt werden.

## Patentansprüche

1. Drehmomentübertragungssystem, insbesondere für den Antriebsstrang eines Fahrzeugs, umfassend:
- eine Torsionsschwingungssdämpferanordnung (12) mit einer mit einem Antriebsorgan zu verbindenden Primärseite (16) und einer über eine Dämpferelementenanordnung (26) zur Drehmomentübertragung mit der Primärseite (16) gekoppelten und bezüglich dieser um eine Drehachse (A) drehbaren Sekundärseite (30),
- eine Kupplung (14) mit einem mit der Sekundärseite (30) der Torsionsschwingungssdämpferanordnung (12) verbundenen Eingangsbereich (34) und einem mehrere in Richtung der Drehachse (A) aufeinander folgende Kupplungsscheiben (52, 59) umfassenden Ausgangsbereich,
wobei der Eingangsbereich (34) ein scheibenartiges Masseteil (36) umfasst, über welches die Aubindung an die Sekundärseite (30) realisiert ist und wobei weiterhin dem Eingangsbereich (34) eine Zwischen platte (40) und eine Aupressplatte (42) zugeordnet sind, wobei eine erste kupplungsscheibe (52) zwischen der zwischen platte (40) und dem Masseteil (36) liegt und eine zweite kupplungscheibe (59) zwischen der zwischenplatte (40) und des Aupressplatte (42) liegt, wobei die kupplungsscheiben (52,59) Reibbeläge (54, 60) aufweisen, welche in Reibkontalet mit Reibflächen (56, 58, 62, 64) aus Masseteil (36), der zwischenplatte (40) und der Aupressplatte (42) stehen und wobei die kupplungsscheiben (52,59) einer einzigen Getriebeeingangswelle zugeordnet sind,
wobei die axial folgend auf die Torsionsschwingungssdämpferanordnung (12) angeordnete erste Kupplungsscheibe (52) einen geringeren Außendurchmesser aufweist, als die von der Torsionsschwingungssdämpferanordnung (12) axial weiter entfernt liegende zweite Kupplungsscheibe (59).

2. Drehmomentübertragungssystem nach Anspruch 1, **dadurch gekennzeichnet, dass** die Dämpferelementenanordnung (26) der Torsionsschwingungssdämpferanordnung (12) in einem Bereich radial außerhalb derersten Kupplungsscheibe (52) angeordnet ist.

3. Drehmomentübertragungssystem nach Anspruch 2, **dadurch gekennzeichnet, dass** die zweite Kupplungsscheibe (52) und die Dämpferelementenanordnung (26) sich radial überlappen.

4. Drehmomentübertragungssystem nach einem der Ansprüche 1 bis 3, **dadurch gekennzeichnet, dass** wenigstens ein Teil der ersten Kupplungsscheibe (52) oder/und eine dieser zugeordnete Reibfläche (56) des Eingangsbereichs (34) der Kupplung (14) In einem von der Dämpferelementenanordnung (26) umgebenen Volumenbereich angeordnet ist.

5. Drehmomentübertragungssystem nach einem der Ansprüche 1 bis 4,
**dadurch gekennzeichnet, dass** die erste Kupplungsscheibe (52) und die zweite Kupplungsscheibe (59) im Bereich ihrer Reibbeläge (54, 60) im Wesentlichen die gleiche axiale Dicke aufweisen.

6. Drehmomentübertragungssystem nach einem der
Ansprüche 1 bis 5, **dadurch gekennzeichnet, dass** die erste Kupplungsscheibe (52) und die zweite Kupplungsscheibe (59) im Bereich ihrer Reibbeläge (54, 60) im Wesentlichen gleiche Reiboberflächen bereitstellen.

7. Drehmomentübertragungssystem nach einem der
Ansprüche 1 bis 6, **dadurch gekennzeichnet, dass** die Kupplungsscheiben (52, 52) des Ausgangsbereichs (66) über eine gemeinsame Nabenanordnung (68) mit einem Abtriebsorgan zu verbinden sind.

## Claims

1. Torque transmission system, in particular for the drive train of a vehicle, comprising:
- a torsional vibration damper arrangement (12) with a primary side (16) to be connected to a drive member and with a secondary side (30) coupled via a damper element arrangement (26) for torque transmission to the primary side (16) and rotatable with respect to the latter about an axis of rotation (A),
- a clutch (14) with an input region (34) connected to the secondary side (30) of the torsional vibration damper arrangement (12) and with an output region comprising a plurality of clutch discs (52, 59) succeeding one another in the direction of the axis of rotation (A), the input region (34) comprising a disc-like mass part (36), via which the tie-up to the secondary side (30) is implemented, and, furthermore, the input region (34) being assigned an intermediate plate (40) and a pressure plate (42), a first clutch disc (52) lying between the intermediate plate (40) and the mass part (36), and a second clutch plate (59) lying between the intermediate plate (40) and the pressure plate (42), the clutch discs (52, 59) having friction linings (54, 60) which are in frictional contact with friction surfaces (56, 58, 62, 64) on the mass part (36), the intermediate plate (40) and the pressure plate (42), and the clutch discs (52, 59) being assigned to a single transmission input shaft,
the first clutch disc (52), arranged so as to axially follow the torsional vibration damper arrangement (12), having a smaller outside diameter than the second clutch disc (59), lying axially further away from the torsional vibration damper arrangement (12).

2. Torque transmission system according to Claim 1, **characterized in that** the damper element arrangement (26) of the torsional vibration damper arrangement (12) is arranged in a region radially outside the first clutch disc (52).

3. Torque transmission system according to Claim 2, **characterized in that** the second clutch disc (52) and the damper element arrangement (26) overlap one another radially.

4. Torque transmission system according to one of Claims 1 to 3, **characterized in that** at least part of the first clutch disc (52) and/or a frictional surface (56), assigned to the latter, of the input region (34) of the clutch (14) is arranged in a region of volume surrounded by the damper element arrangement (26).

5. Torque transmission system according to one of Claims 1 to 4, **characterized in that** the first clutch disc (52) and the second clutch disc (59) have essentially the same axial thickness in the region of their frictional linings (54, 60).

6. Torque transmission system according to one of Claims 1 to 5, **characterized in that** the first clutch disc (52) and the second clutch disc (59) provide essentially the same frictional surfaces in the region of their frictional linings (54, 60).

7. Torque transmission system according to one of Claims 1 to 6, **characterized in that** the clutch discs (52, 59) of the output region (66) are to be connected to a driven member via a common hub arrangement (68).

## Revendications

1. Système de transmission de couple de rotation, notamment pour la chaîne d'entraînement d'un véhicule, comprenant :
- un dispositif amortisseur d'oscillations en torsion (12) doté d'un côté principal (16) à relier à l'organe d'entraînement en entrée et d'un côté secondaire (30) couplé au côté principal (16) par le biais d'un dispositif d'élément amortisseur (26) servant à la transmission de couple de rotation et pouvant pivoter par rapport à celui-ci autour d'un axe de rotation (A) ;
- un embrayage (14) doté d'une zone d'entrée (34) reliée au côté secondaire (30) du dispositif amortisseur d'oscillations en torsion (12) et d'une zone de sortie comprenant plusieurs disques d'embrayage (52, 59) successifs en direction de l'axe de rotation (A) ;
la zone d'entrée (34) comprenant une partie de masse (36) de type disque par le biais de laquelle est réalisée la jonction au côté secondaire (30) et une plaque intermédiaire (40) et une plaque de compression (42) étant en outre associées à la zone d'entrée (34), un premier disque d'embrayage (52) reposant entre la plaque intermédiaire (40) et la partie de masse (36) et un deuxième disque d'embrayage (59) reposant entre la plaque intermédiaire (40) et la plaque de compression (42), les disques d'embrayage (52, 59) comportant des coupelles de frottement (54, 60) se trouvant en contact de frottement avec les surfaces de frottement (56, 58, 62, 64) au niveau de la partie de masse (36), de la plaque intermédiaire (40) et de la plaque de compression (42) et les disques d'embrayage (52, 59) étant associés à un unique arbre d'entrée de boîte de vitesses ;
le premier disque d'embrayage (52) disposé dans le plan axial à la suite du dispositif amortisseur d'oscillations en torsion (12) comporte un diamètre extérieur davantage réduit que celui du deuxième disque d'embrayage (59) reposant à plus grande distance, dans le plan axial, du dispositif amortisseur d'oscillations en torsion (12).

2. Système de transmission de couple de rotation selon la revendication 1, **caractérisé en ce que** le dispositif d'élément amortisseur (26) du dispositif amortisseur d'oscillations en torsion (12) est disposé dans une zone se situant dans le plan radial à l'extérieur du premier disque d'embrayage (52).

3. Système de transmission de couple de rotation selon la revendication 2, **caractérisé en ce que** le deuxième disque d'embrayage (52) et le dispositif d'élément amortisseur (26) se chevauchent dans le plan radial.

4. Système de transmission de couple de rotation selon l'une quelconque des revendications 1 à 3, **caractérisé en ce qu'**au moins une partie du premier disque d'embrayage (52) et/ou une surface de frottement (56), lui étant associée, de la zone d'entrée (34) de l'embrayage (14) est disposée dans une zone volumineuse entourée par le dispositif d'élément amortisseur (26).

5. Système de transmission de couple de rotation selon l'une quelconque des revendications 1 à 4, **caractérisé en ce que** le premier disque d'embrayage (52) et le deuxième disque d'embrayage (59) présentent, dans la zone de leurs coupelles de frottement (54, 60), pour l'essentiel la même épaisseur axiale.

6. Système de transmission de couple de rotation selon l'une quelconque des revendications 1 à 5, **caractérisé en ce que** le premier disque d'embrayage (52) et le deuxième disque d'embrayage (59) disposent, dans la zone de leurs coupelles de frottement (54, 60), de surfaces de frottement pour l'essentiel identiques.

7. Système de transmission de couple de rotation selon l'une quelconque des revendications 1 à 6, **caractérisé en ce que** les disques d'embrayage (52, 52) de la zone de sortie (66) sont reliés à un organe d'entraînement en sortie par le biais d'un agencement de moyeu (68) commun.
